# EUROPÄISCHE PATENTSCHRIFT

(11) **EP 0 792 580 B1**
(45) Veröffentlichungstag und Bekanntmachung des Hinweises auf die Patenterteilung: **02.02.2000**
(21) Anmeldenummer: 97103015.0
(22) Anmeldetag: 25.02.1997
(51) Int. Cl.: A01K 9/00

(54) **Tränkeautomat für Tiere**
Automatic liquid dispenser for animals
Distributeur automatique de liquides pour animaux

(30) Priorität: 29.02.1996 DE 29603702 U
(43) Veröffentlichungstag der Anmeldung: 03.09.1997
(73) Patentinhaber: Förster, Martin, 78234 Engen (DE)
(72) Erfinder: Förster, Martin, 78234 Engen (DE)
(74) Vertreter: Weiss, Peter, Dr. rer. nat.

(56) Entgegenhaltungen:
- FR-A- 328 373
- FR-A- 1 492 876
- FR-A- 2 689 727

## Beschreibung

Die Erfindung betrifft einen Tränkeautomaten für Tiere, insbesondere Kälber, mit einer Mischeinrichtung mit Rührer, welcher Zuleitungen für eine Flüssigkeit und einen Feststoff, insbesondere Milchpulver, zugeordnet sind und die eine Ablauföffnung zur Tränke hin aufweist.

Derartige Tränkeautomaten für Tiere sind in vielfältiger Form und Ausführung auf dem Markt. Nur beispielsweise wird auf das Deutsche Gebrauchsmuster 295 09 529.6 verwiesen. Diese Tränkeautomaten dienen vor allem dem Füttern von Kälbern, sie werden jedoch auch zum Füttern von Schafen, Lämmern und anderen Tieren verwendet.

Wesentlich bei derartigen Tränkeautomaten ist, daß in einer Mischeinrichtung das Anrühren des Futtermittels erfolgt. Bei jungen Tieren handelt es sich vor allem um das Anmischen eines Milchmixgetränkes, wobei Milchpulver mit Wasser vermischt wird.

Diese Mischung soll jedoch nur beispielhaft verstanden werden, im Rahmen der vorliegenden Erfindung liegt das Anmischen eines beliebigen Mischgetränkes.

Es versteht sich von selbst, daß eine derartige Mischeinrichtung bzw. ein Mischbehälter im Laufe der Zeit verschmutzt bzw. verklebt, sodaß er von Zeit zu Zeit gereinigt werden muß. Aus diesem Grunde ist bislang ein derartiger Mischbehälter kippbar gelagert, wobei er um etwa 120° gekippt wird, sodaß eine Spülflüssigkeit, die vorher in den Mischbehälter eingebracht wurde, abgelassen werden kann. Das Reinigen der Behälterinnenwand selbst erfolgt in der Regel mit einer Bürste und unter Zuhilfenahme der Spülflüssigkeit.

Aus der FR 328.373 ist ein Aufnahmebehälter für Nahrungsmittel für Tiere bekannt, bei welchem in einen Auslass ein Siebelement eingesetzt ist.

Dieses Siebelement kann zwar zur Reinigung entnommen werden, jedoch verschmutzt und verstopft es, während des Durchfliessens von Nahrungsmittel. Ein manuelles Reinigen jedoch nur im entleerten Zustand des Behälters ist häufig erforderlich, was unerwünscht ist.

Der vorliegenden Erfindung liegt die Aufgabe zugrunde, das Reinigen der Mischeinrichtung zu automatisieren und wesentlich zu erleichtern.

Zur Lösung dieser Aufgabe führt, daß die Ablauföffnung zur Tränke von einem Gitter überdeckt ist, welches nahe dem Rührer angeordnet ist, damit das Gitter (26) durch die Flüssigkeit und die Tätigkeit des Rührers (8) gereinigt wird.

Damit Ungeziefer, verklumptes Milchpulver oder anderer Dreck von der Tränke ferngehalten wird, soll bei der Erfindung die Ablauföffnung von einem Gitter überdeckt sein. Die Reinigung des Gitters kann durch eine Spüleinrichtung erfolgen, wobei das Gitter möglichst nahe an dem Rührer angeordnet ist. In Folge der Turbulenzen, die durch den Rührer entstehen, werden auch Gitterflächen bzw. Löcher in den Gitterflächen freigespült, sodaß der Dreck od. dgl. mit der Spülflüssigkeit aus der Spüleinrichtung ausgetragen wird.

Damit die Gitterflächen besser den Turbulenzen des Rührers ausgesetzt sind, sollen sie angestellt sein. D.h., Spülflüssigkeit prallt durch die Turbulenzen direkt gegen die Gitterflächen, sodaß auf haftenden Schmutz ein Druck ausgeübt wird, der den Schmutz von den Gitterflächen entfernt. Aus diesem Grunde sind auch die Gitterflächen mit einer Oberfläche versehen, die eine möglichst geringe Haftung von Schmutz zuläßt. Auch wird eine bessere Abreinigung der Gitterflächen dadurch erzielt, daß an den Rührer Reinigungselemente, beispielsweise Borsten, vorgesehen sind. Diese überstreichen die Gitterflächen, so daß es zu einer Entfernung von Schmutz, Klumpen oder sonstigen anhaftenden Bestandteilen kommt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Grundansicht eines Tränkeautomates;
Figur 2 eine Draufsicht auf eine vergrößert dargestellte Mischeinrichtung für einen Tränkeautomaten gemäß Figur 1;
Figur 3 eine Draufsicht auf ein weiteres Ausführungsbeispiel einer vergrößert dargestellten Mischeinrichtung für einen Tränkeautomaten gemäß Figur 1;
Figur 4 eine Draufsicht auf die Mischeinrichtung gemäß Figur 3 um 90° gedreht.

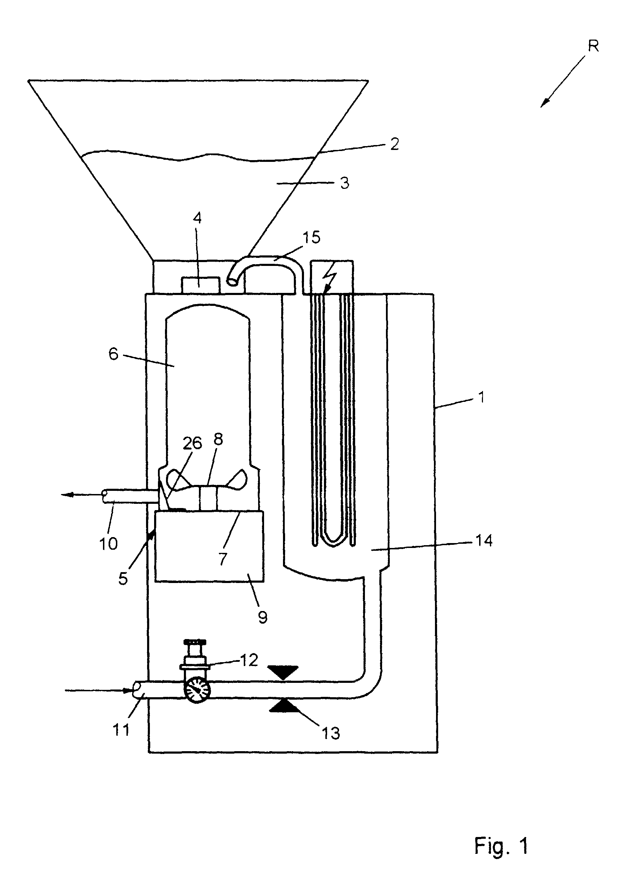

Ein Tränkeautomat R weist gemäß Figur 1 ein schematisch dargestelltes Gehäuse 1 auf, dem ein trichterförmiger Vorratsbehälter 2 zur Aufnahme eines Milchpulvers 3 aufgesetzt ist. Dieses Milchpulver 3 gelangt aus einer Auswurföffnung 4 dosiert in eine Mischeinrichtung 5.

Die Mischeinrichtung 5 sieht einen meist durchsichtigen, Mischbehälter 6 vor, nahe dessen Behälterboden 7 sich ein Rührer 8 befindet. Dieser Rührer 8 wird von einem nur schematisch dargestellten Motor 9 angetrieben. Eine in dem Mischbehälter 6 hergestellte Mischung gelangt über eine Leitung 10 zu einer nicht näher dargestellten Tränke.

In dem Mischbehälter 6 erfolgt eine Mischung des Milchpulvers 3 mit einer Flüssigkeit, bevorzugt mit Wasser. Dieses Wasser wird von einer Zuleitung 11 herangeführt, durchfließt im vorliegenden Ausführungsbeispiel einen Druckminderer 12 und ein nur schematisch dargestelltes Magnetventil 13, bevor es in einen Boiler 14 gelangt.

In dem Boiler 14 wird das Wasser aufgeheizt, wobei dann das erwärmte Wasser über einen Auslauf 15 in den Mischbehälter 6 eingefüllt wird.

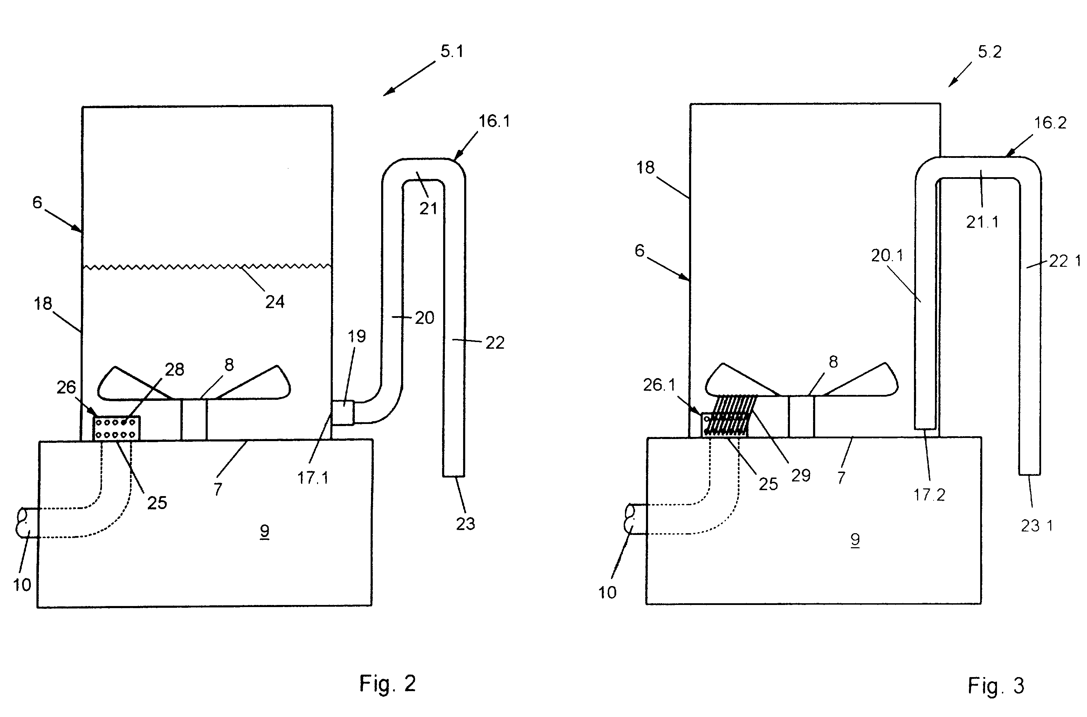

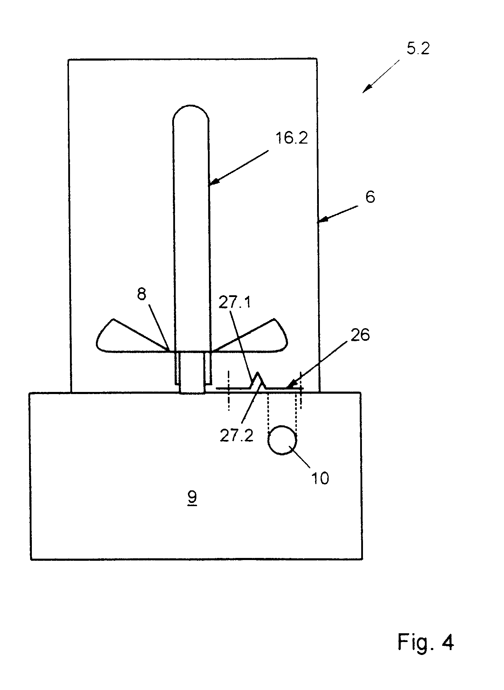

In den Figuren 2 bis 4 ist die Mischeinrichtung 5 näher beschrieben, wobei sich die Mischeinrichtung 5.1 gemäß Figur 2 von derjenigen Mischeinrichtung 5.2 gemäß den Figuren 3 und 4 geringfügig unterscheidet. In beiden Fällen ist der Mischeinrichtung 5.1 und 5.2 eine Spüleinrichtung 16.1 bzw. 16.2 zugeordnet.

Die Spüleinrichtung 16.1 weist gemäß Figur 2 einen Auslaß 17.1 für Spülflüssigkeit aus dem Mischbehälter 6 auf, wobei dieser Auslaß 17.1 als ein Durchbruch in einer Behälterwand 18 ausgebildet ist. Wichtig ist, daß der Auslaß 17 nahe dem Behälterboden 7 angeordnet ist, damit tatsächlich die gesamte Spülflüssigkeit dem Mischbehälter 6 entnommen werden kann. Beispielsweise könnte der Auslaß 17.1 sich auch in dem Behälterboden 7 selbst befinden.

In dem in Figur 2 gezeigten Ausführungsbeispiel schließt an den Auslaß 17.1 ein Stutzen 19 an, auf den ein Schlauch aufgeschoben ist. Dieser Schlauch besteht im wesentlichen aus einer Steigleitung 20, die in eine waagrechte oder gekrümmte Überlaufleitung 21 übergeht, an die sich eine Ablaufleitung 22 anschließt. Die Ablaufleitung 22 endet mit einer Auslaßöffnung 23, die sich im Niveau unter dem Behälterboden 7 befindet. Aus der Auslaßöffnung 23 kann Spülflüssigkeit in einen Behälter fließen oder durch eine weitere Leitung abgeführt werden.

Das Ausführungsbeispiel der Spüleinrichtung 16.2 gemäß den Figuren 3 und 4 unterscheidet sich dadurch, daß eine Steigleitung 20.1 im Inneren des Mischbehälters 6 verläuft. Dementsprechend beginnt ein Auslaß 17.2 für Spülflüssigkeit aus dem Mischbehälter 6 kurz über dem Behälterboden 7.

Eine Überlaufleitung 21.1 durchbricht die Behälterwand 18, wobei dann an die Überlaufleitung 21.1 die Ablaufleitung 22.1 mit der Auslaßöffnung 23.1 anschließt.

Die Funktionsweise der vorliegenden Erfindung ist folgende:

Zum Herstellen einer Tränkemischung wird Milchpulver aus dem Vorratsbehälter 2 über die Auswurföffnung 4 in den Mischbehälter 6 eingegeben. Gleichzeitig oder danach erfolgt eine Zugabe von erwärmter Flüssigkeit über den Auslauf 15. Durch die Tätigkeit des Rührers 8 erfolgt eine innige Vermischung des Milchpulvers mit der Flüssigkeit und insbesondere eine Auflösung des Milchpulvers. Dabei ist jedoch nicht zu verhindern, daß ein Pulverrand 24 an der Behälterwand 18 auf dem Niveau der Futtermischung verbleibt, auch wenn die Futtermischung über die Leitung 10 einer Tränke zugeführt wird. Deshalb muß von Zeit zu Zeit der Mischbehälter 6 gereinigt werden, und zwar bevorzugt, bevor der Pulverrand 24 zu stark an der Behälterwand 18 haftet. Dies geschieht dadurch, daß über die Zuleitung 11 und den Auslauf 15 klares Wasser, welches nicht vorerwärmt sein muß, in den Mischbehälter 6 eingeführt wird und zwar in einer Füllhöhe über dem Pulverrand 24.

Danach erfolgt ein Ingangsetzen des Rührers 8, sodaß die Spülflüssigkeit in dem Mischbehälter 6 intensiv bewegt wird, wodurch der Pulverrand 24 beseitigt wird. Sobald dies geschehen ist bzw. nach einer gewissen Zeit wird weitere Spülflüssigkeit in den Mischbehälter 6 eingegeben, sodaß nach dem Prinzip der kommunizierenden Röhren der Flüssigkeitsspiegel auch in der Steigleitung 20 bis zur Überlaufleitung 21 ansteigt, sodaß dann nach den hydrostatischen Auslaufgesetzen von Bernoulli und Torricelli ein selbstständiges Auslaufen der gesamten Spülflüssigkeit aus dem Mischbehälter 6 erfolgt.

Der gesamte Vorgang geschieht bevorzugt programmgesteuert durch den Tränkeautomaten selbst, er kann jedoch auch von dem Benutzer von Zeit zu Zeit manuell in Gang gesetzt werden.

Da Tränkeautomaten erfahrungsgemäß in Stallungen auch viel Ungeziefer anziehen, hat es sich als ratsam erwiesen, eine Ablauföffnung 25 im Behälterboden 7 bzw. einer Behälterwand 66 zur Leitung 10 hin mit einem Gitter 26 zu überdecken. Dieses Gitter 26 weist gemäß Figur 4 zwei angestellte Gitterflächen 27.1 und 27.2 auf, welche mit entsprechenden Löchern durchsetzt sind. Die angestellten Gitterflächen 27.1 und 27.2 haben den Vorteil, daß sie Turbulenzen, die durch den Rührer 8 erfolgen, ausgesetzt sind, sodaß bei Betätigung des Rührers 8 eine ständige Oberflächenreinigung der Gitterflächen 27.1 und 27.2 erfolgt. Auf diese Weise hält das Gitter 26 wirkungsvoll Ungeziefer, verklumptes Pulver und sonstigen Dreck von der Zuleitung 10 zu der Tränke fern und wird insbesondere ständig durch die Spülflüssigkeit und die Tätigkeit des Rührers 8 gereinigt.

Ist die Zuleitung 10 in einer Seitenwand des Mischbehälters 6 angeordnet, so genügt es, wenn das Gitter 26, wie in Figur 1 gezeigt nur gegen diese Seitenwand angestellt ist.

Eine Verbesserung der Reinigung des Gitters 26 erfolgt noch dann, wenn der Rührer 8 mit Reinigungselementen 29, beispielsweise Borsten, belegt ist, welche das Gitter 27 überstreifen.

## Patentansprüche

1. Tränkeautomat für Tiere, insbesondere Kälber mit einer Mischeinrichtung (5) mit Rührer (8), welcher Zuleitungen (11, 15, 4) für eine Flüssigkeit und einen Feststoff, insbesondere Milchpulver, zugeordnet sind und die eine Ablauföffnung (25) zur Tränke hin aufweist,
dadurch gekennzeichnet,
daß die Ablauföffnung (25) zur Tränke von einem Gitter (26) überdeckt ist, welches nahe dem Rührer (8) angeordnet ist, damit das Gitter (26) durch die Flüssigkeit und die Tätigkeit des Rührers (8) gereinigt wird.

2. Tränkeautomat nach Anspruch 1, dadurch gekennzeichnet, daß das Gitter (26) Gitterflächen (27.1, 27.2) aufweist, welche mit Durchlaßöffnungen (28) gegen den Rührer (8) angestellt sind.

3. Tränkeautomat nach Anspruch 1 oder 2, dadurch gekennzeichnet, daß an dem Rührer (8) Reinigungselemente (29) für das Gitter (26) angebracht sind.

## Claims

1. Automatic drink dispenser for animals, more especially calves, having a mixing arrangement (5) with agitator (8), with which arrangement pipes (11, 15, 4) for supplying a liquid and a solid, more especially milk powder, are associated, and which arrangement has a discharge opening (25) facing the drinking location, characterised in that the discharge opening (25) at the drinking location is covered by a grille (26), which is disposed close to the agitator (8), so that the grille (26) is cleaned by the liquid and the action of the agitator (8).

2. Automatic drink dispenser according to claim 1, characterised in that the grille (26) has grille faces (27.1, 27.2) which are provided with through-apertures (28) directed towards the agitator (8).

3. Automatic drink dispenser according to claim 1 or 2, characterised in that cleaning elements (29) for the grille (26) are mounted on the agitator (8).

## Revendications

1. Distributeur automatique de liquides pour animaux, en particulier pour des veaux, avec un dispositif de mélange (5), équipé d'un agitateur (8), auquel sont associées des conduites d'amenée (11, 15, 4) pour un liquide et un solide, en particulier de la poudre de lait, et présentant une ouverture d'évacuation (25) pour l'abreuvoir,
caractérisé en ce que
l'ouverture d'évacuation (25) pour l'abreuvoir est recouverte par une grille (26) qui est disposée près de l'agitateur (8), afin que la grille (26) soit nettoyée par le liquide et par l'activité de l'agitateur (8).

2. Distributeur automatique de liquides pour animaux selon la revendication 1,
caractérisé en ce que
la grille (26) présente des surfaces de grille (27.1, 27.2) qui sont dotées d'ouvertures de passage (28) orientées vers l'agitateur (8).

3. Distributeur automatique de liquides pour animaux selon la revendication 1 ou 2,
caractérisé en ce que
des éléments de nettoyage (29) destinés à la grille (26) sont montés sur l'agitateur (8).
